# EUROPÄISCHE PATENTSCHRIFT

(11) **EP 3 587 763 B1**
(45) Veröffentlichungstag und Bekanntmachung des Hinweises auf die Patenterteilung: **29.09.2021**
(21) Anmeldenummer: 19183207.0
(22) Anmeldetag: 28.06.2019
(51) Int. Cl.: F02B 63/04, F02D 29/06, H02J 3/00, H02P 9/04, F02B 43/00, F02M 21/00

(54) **VERFAHREN ZUM REGELN EINER FLUIDENERGIEMASCHINE UND EINE REGELUNGSANORDNUNG, INSBESONDERE ZUM DURCHFÜHREN DES VERFAHRENS**
METHOD FOR REGULATING A FLUID ENERGY MACHINE AND A CONTROL ASSEMBLY, IN PARTICULAR FOR CARRYING OUT THE METHOD
PROCÉDÉ DE RÉGULATION D'UNE MACHINE À ÉNERGIE FLUIDIQUE ET DISPOSITIF DE RÉGULATION, EN PARTICULIER DESTINÉ À LA MISE EN OUVRE DUDIT PROCÉDÉ

(30) Priorität: 29.06.2018 DE 102018115781
(43) Veröffentlichungstag der Anmeldung: 01.01.2020
(73) Patentinhaber: Geisberger, Maximilian, 84419 Schwindegg (DE)
(72) Erfinder: Geisberger, Maximilian, 84419 Schwindegg (DE); Eichhorn, Sebastian, 83624 Otterfing (DE)
(74) Vertreter: Flügel Preissner Schober Seidel

(56) Entgegenhaltungen:
- EP-A1- 1 504 521
- US-A- 4 593 364
- US-A1- 2016 036 230
- US-B2- 6 784 565
- US-B2- 8 258 640

## Beschreibung

Die Erfindung betrifft ein Verfahren zum Regeln einer Fluidenergiemaschine und eine Regelungsanordnung, die insbesondere zum Durchführen des Verfahrens dient. Die Fluidenergiemaschine findet bevorzugt für ein Stromaggregat zur Einspeisung von insbesondere aus gasförmigen Brennstoffen wie Biogas gewonnener Energie in ein elektrisches Energieversorgungsnetz Anwendung.

Ein elektrisches Energieversorgungsnetz im Sinne der vorliegenden Erfindung ist ein Stromnetz, das in der elektrischen Energietechnik der Versorgung von Verbrauchern mit elektrischer Energie dient. Ein Stromnetz ist ein Netzwerk aus elektrischen Stromleitungen, insbesondere Freileitungen und Erdkabeln, die insbesondere Einrichtungen wie Kraftwerke und andere Energieumwandler, beispielsweise Windenergie- und Photovoltaikanlagen, daran angeschlossene Schalt- und Umspannwerke und die Verbraucher miteinander verbinden.

Das elektrische Energieversorgungsnetz kann als sogenanntes Verbundnetz ausgestaltet sein, das sich in der Regel aus großen, räumlich benachbarten und elektrisch verbundenen Stromnetzen, die eine Vielzahl von Kraftwerken und Verbrauchern umfassen, zusammensetzt. Das elektrische Energieversorgungsnetz kann jedoch auch als sogenanntes Inselnetz ausgestaltet sein, also als ein lokal abgegrenztes Stromnetz, das ein räumlich enges Gebiet versorgt und keinen direkten elektrischen Anschluss zu anderen Stromnetzen hat.

Bekannt sind Stromaggregate zur Einspeisung von Energie in ein elektrisches Energieversorgungsnetz, bei denen die Energie aus gasförmigen Brennstoffen gewonnen wird. Als gasförmiger Brennstoff eignet sich beispielsweise Biogas, ein brennbares Gas, das durch Vergärung von Biomasse entsteht. Biogas wird üblicherweise in Biogasanlagen hergestellt, mittels denen biologische Abfälle und nachwachsende Rohstoffe vergoren werden.

Ein solches Stromaggregat umfasst üblicherweise einen Generator, der insbesondere als Synchrongenerator ausgestaltet ist, und eine in der Regel als Verbrennungskraftmaschine ausgestaltete Fluidenergiemaschine, die den Generator antreibt. Durch die Verbrennungskraftmaschine wird die chemische Energie des Brennstoffes, etwa eines Gases, wie beispielsweise Biogas, Holzgas, Grubengas, Erdgas oder Propan, in kinetische Energie umgewandelt, mit welcher der Generator dann angetrieben wird. Der Generator wandelt die kinetische Energie in elektrische Energie um, die in das Energieversorgungsnetz eingespeist wird.

Ist der Generator des Stromaggregats ein Synchrongenerator, so muss der Generator mit dem elektrischen Energieversorgungsnetz synchronisiert werden, bevor Energie von dem Stromaggregat in das elektrische Energieversorgungsnetz eingespeist werden kann.

Gewöhnlich wird eine Regelgröße, wie etwa die Drehzahl oder das Drehmoment, bei einer Fluidenergiemaschine über einen einzigen Regelkreis geregelt. Ein Beispiel hierfür ist aus EP 2 315 946 B1 bekannt.

Ein Regelkreis besteht grundsätzlich aus einer Regelstrecke, einem Stellglied, einem Regler und einer Rückführung, die in einem geschlossenen Kreis miteinander verbunden sind. Die Regelstrecke wird über das Stellglied durch den Regler geregelt. Die Regelung des Reglers selbst basiert auf einer Regelgröße, welche von der Regelstrecke zurückgeführt wird. Somit kann der Regler die Regelstrecke immer basierend auf einem aktuellen Ausgangswert der Regelstrecke nachregeln.

Bei einem einzigen Regelkreis regelt der Regler üblicherweise den gesamten Wertebereich einer Regelgröße. Regelkreise, die über vergleichsweise weite Wertebereiche regeln können, und das optimaler Weise in einer vertretbaren Zeit, weisen vergleichsweise hohe Zeitkonstanten auf.

Die Zeitkonstante des Regelkreises bildet die Verzögerungszeiten im Regelkreis ab. Weist ein Regelkreis hohe Verzögerungszeiten auf, neigt der Regelkreis dazu, beim Regeln auf einen vorgegebenen Wert der Regelgröße diesen zu durchfahren. Dieser Effekt wird Überschwingen genannt. Der Regler muss daraufhin die Regelgröße wieder herunterregeln. Als Überschwingen ist somit zu verstehen, dass in einem Regelkreis aufgrund von unvermeidbaren Verzögerungszeiten, welche durch die Zeitkonstante abgebildet werden, beim Regeln der Regelgröße der Zielwert durchfahren wird und der Regelkreis somit überschwingt. Erst durch eine immer präziser werdende Regelung, dem sogenannten Ausregeln, kann der Zielwert stabil erreicht werden. In einem umgedrehten Regelkreis kann es ebenso zu einem Unterschwingen kommen.

Regelkreise mit vergleichsweise hohen Zeitkonstanten, die häufig bei mechanischen Stellgrößen auftreten, zeichnen sich durch besonders hohes Überschwingen aus. Das Ausregeln der Fluidenergiemaschinen wird damit vergleichsweise aufwendig.

Aus WO 2017/137227 A1 ist ein Kraftwerk mit einer Gasturbine und einem Generator bekannt, bei dem mit Hilfe von einem elektrischen Motor die Gasturbine beschleunigt wird. Der Motor ist nur während des Starts und gegebenenfalls während der Abkühlphase, im sogenannten Drehbetrieb, der Gasturbine in Betrieb. In diesem Zeitraum wird er über einen Umrichter versorgt, sonst dreht er nur im Leerlauf mit.

Ein Verfahren zum Betrieb einer Windenergieanlage offenbart DE 10 2006 040 929 A1. Ein Synchrongenerator wird vor dem Aufschalten der Windenergieanlage mit dem Netz synchronisiert. Hierzu wird die Generatorwelle über ein Überlagerungsgetriebe von einem Motor angetrieben. Die Drehzahl wird erhöht bis die Nenndrehzahl des Synchrongenerators erreicht ist.

US 8 258 640 B2 offenbart ein Energiesystem, das ein Generatorset und ein System zur Verwaltung einer transienten Last (TLMS). Das Generatorset und das TLMS können mittels eines Übertragungsnetzes und einer Koppelstelle miteinander verbunden werden, um einen externen Verbraucher mit elektrischer Energie zu versorgen. Für den Fall, dass eine Versorgung des externen Verbrauchers mit elektrischer Energie unterbrochen ist und das Generatorset sich noch in einer Übergangsphase befindet, wodurch nicht ausreichend Energie zur Verfügung gestellt wird, speist das TLMS hilfsweise elektrische Energie in das Übertragungsnetz ein. Die Regelung der eingespeisten Energie wird über ein Steuergerät gesteuert.

US 2016/036230 A1 offenbart eine Gasturbine, die einen Verdichter umfasst. Der Verdichter komprimiert einströmende Luft und liefert diese an eine Brennkammer. Die Brennkammer vermischt die komprimierte Luft mit einem unter Druck stehenden Brennstoff und zündet das Gemisch, um Verbrennungsgase zu erzeugen. Die Verbrennungsgase werden wiederum einer Turbine zugeführt, die mechanische Arbeit produziert. Der Generator wird über eine Welle der Turbine angetrieben.

US 6 784 565 B2 offenbart einen Leistungsregler, der einen Leistungswandler umfasst, die gemeinsam einen DC-Bus verwenden. Die Kompatibilität zwischen einer oder mehreren Energiekomponenten wird darüber ermöglicht. Jeder Leistungswandler arbeitet im Wesentlichen als ein bidirektionaler Schaltwandler, der unter der Steuerung des Leistungsreglers derart konfiguriert ist, dass er eine Schnittstelle für eine bestimmte Energiekomponente zum Gleichstrombus bereitstellt. Der Leistungsregler steuert die Art und Weise, in der jede Energiekomponente zu jedem Zeitpunkt Leistung aufnimmt oder abgibt, sowie die Art und Weise, wie der Gleichstrombus geregelt wird.

Der Erfindung liegt die **Aufgabe** zugrunde, ein Verfahren zum Regeln einer Fluidenergiemaschine und eine Regelungsanordnung, die sich insbesondere zum Durchführen des Verfahrens eignet, zur Verfügung zu stellen, die eine vergleichsweise schnelle und genaue Regelung ermöglichen.

Die Aufgabe wird durch ein Verfahren nach Anspruch 1 und eine Regelungsanordnung nach Anspruch 5 **gelöst.** Bevorzugte Ausgestaltungen des Verfahrens finden ihren Niederschlag in den Ansprüchen 1 bis 4, und bevorzugte Ausgestaltungen der Regelungsanordnung finden ihren Niederschlag in den Ansprüchen 6 bis 12.

Das erfindungsgemäße Verfahren zum Regeln einer Fluidenergiemaschine, mittels der Energie in mechanische Arbeit umgewandelt wird und die eine Drehbewegung mit einem ersten Drehmoment erzeugt und die mit einer Ausgangswelle, an der ein zweites Drehmoment bei einer Drehzahl anliegt, verbunden ist, umfasst die folgenden Verfahrensschritte:
Regeln des ersten Drehmoments in einem ersten Verfahrensschritt mittels einer Regelungsvorrichtung derart, dass das zweite Drehmoment auf ein vorbestimmtes Zwischendrehmoment bei einer Zwischendrehzahl eingestellt wird, wobei die Fluidenergiemaschine und die Regelungsvorrichtung einen ersten Regelkreis mit einer ersten Zeitkonstante bilden;

Regeln der Drehzahl der Ausgangswelle in einem zweiten Verfahrensschritt mittels eines Hilfsaggregats derart, dass die Drehzahl von der Zwischendrehzahl auf eine vorbestimmte Zieldrehzahl eingestellt wird, wobei ein sich an der Ausgangswelle ergebenes Massenträgheitsmoment und das Hilfsaggregat einen zweiten Regelkreis mit einer zweiten Zeitkonstante bilden und wobei die zweite Zeitkonstante geringer ist als die erste Zeitkonstante.

Im vorliegenden Fall ist als Regelstrecke das Massenträgheitsmoment der Fluidenergiemaschine zu verstehen. Jegliche mit der Fluidenergiemaschine gekoppelte Last, beispielsweise ein Generator, trägt zum Massenträgheitsmoment bei, das heißt bestimmt die Charakteristik der Regelstrecke.

Um die Fluidenergiemaschine auf die Zieldrehzahl zu regeln, wird die Fluidenergiemaschine durch Stellglieder geregelt, welche wiederum von einem Regler, also der Regelungsvorrichtung oder dem Hilfsaggregat, geregelt werden. Die aktuelle Drehzahl der Ausgangswelle, die Bestandteil der Fluidenergiemaschine oder ein separates Bauteil sein kann, steht dem Regler zur Verfügung. Je nachdem ob der Regler die Regelungsvorrichtung oder das Hilfsaggregat verwendet, wirkt der erste oder der zweite Regelkreis. Als Regelgrößen sind das erste Drehmoment der Fluidenergiemaschine im ersten Regelkreis und die Drehzahl der Ausgangswelle im zweiten Regelkreis vorgesehen.

Als Ausregeln der Fluidenergiemaschine ist somit der Regelungsvorgang zu verstehen, wenn die Fluidenergiemaschine von einer aktuellen Drehzahl auf eine vorher bestimmte Zieldrehzahl geregelt wird und das Überschwingen solange geregelt wird, bis die Fluidenergiemaschine die Zieldrehzahl stabil hält.

Aufgrund der im Vergleich zu der ersten Zeitkonstante des ersten Regelkreises niedrigeren zweiten Zeitkonstante des zweiten Regelkreises fällt ein Überschwingen des Regelkreises beim Ausregeln der Fluidenergiemaschine weniger stark aus.

Der zweite Regelkreis regelt die Drehzahl von der Zwischendrehzahl auf die Zieldrehzahl somit schneller als dies der erste Regelkreis in gleichem Maße über die Regelgröße des ersten Drehmoments erreichen könnte. Auf diese Weise wird nicht nur eine zuverlässigere, sondern auch eine schnellere und präzisere Regelung ermöglicht.

Die Regelungsvorrichtung fungiert als Stellglied für den ersten Regelkreis, wobei vorzugsweise die Regelungsvorrichtung eine Drossel als Stellglied umfasst. Eine Drossel eignet sich besonders gut als Stellglied, da sie eine einfache, effiziente Ausführung eines Stellglieds darstellt. Je nach Stellung der Drossel kann direkt die Menge des Fluids, mit welchem die Fluidenergiemaschine betrieben wird, geregelt werden. Der auf insbesondere der Drossel und der Fluidenergiemaschine basierende Regelkreis weist jedoch eine vergleichsweise hohe erste Zeitkonstante auf, was sich nachteilig bei einer präzisen Regelung, insbesondere beim Ausregeln der Fluidenergiemaschine, auswirkt.

Das Hilfsaggregat fungiert als Stellglied für den zweiten Regelkreis. Das Hilfsaggregat und die Regelungsvorrichtung können als eine gemeinsame Vorrichtung ausgebildet sein, welche die zwei unterschiedlichen Stellglieder umfasst.

In dem ersten Verfahrensschritt wird das erste Drehmoment ausschließlich mittels der Regelungsvorrichtung geregelt und in dem zweiten Verfahrensschritt die Drehzahl ausschließlich mittels des Hilfsaggregats geregelt.

Der erste und der zweite Regelkreis unterscheiden sich vor allem in den unterschiedlichen Zeitkonstanten. Ein Regelkreis mit hoher Zeitkonstante weist zwar Vorteile beim groben Regeln von großen Wertebereichen der Regelgröße auf, ist allerdings aufgrund des hohen Überschwingens nachteilig bei präzisen Regelungen. Dem hingegen zeichnet sich ein Regelkreis mit niedriger Zeitkonstante durch eine besonders präzise Regelung aus, ist aber nachteilig beim Regeln großer Wertebereiche der Regelgröße. Deshalb hat es sich als vorteilhaft erwiesen, die Drehzahl über das erste Drehmoment in dem ersten Regelkreis ausschließlich mittels der Regelvorrichtung zu regeln, um die Vorteile bei großen Wertebereichen der Regelgröße auszunutzen, und in dem zweiten Regelkreis die Drehzahl ausschließlich mittels des Hilfsaggregats zu regeln, um die Vorteile einer präzisen Regelung auszunutzen.

Die Zwischendrehzahl kann in einem Toleranzband um die Zieldrehzahl liegen. Diese muss im Allgemeinen jedoch nicht stabil gehalten, sondern nur punktuell erreicht werden. Als zweckmäßig hat es sich erwiesen, wenn die Zwischendrehzahl in einem Bereich zwischen 60% und 140% der Zieldrehzahl liegt. Vorzugsweise liegt die Zwischendrehzahl in einem Bereich zwischen 80% und 120% der Zieldrehzahl. Liegt die Zieldrehzahl beispielsweise bei ca. 1500 Umdrehungen pro Minute (U/min), dann kann sich die Zwischendrehzahl in einem Bereich zwischen 900 U/min (60%) bis 2100 U/min (140%) bewegen. Bevorzugt bewegt sich die Zwischendrehzahl in einem Bereich zwischen 1200 U/min (80%) und 1800 U/min (120%).

Zum Ausnutzen der einzelnen Vorteile der Regelkreise mit niedriger und hoher Zeitkonstante wird ein großer Teil der zu regelnden Drehzahl über das erste Drehmoment durch den ersten Regelkreis mit hoher Zeitkonstante geregelt, und zwar bis das Zwischendrehmoment erreicht ist. Danach setzt die Regelung durch den zweiten Regelkreis mit niedriger Zeitkonstante ein, um die Drehzahl der Ausgangswelle von der Zwischendrehzahl, welche sich durch das Zwischendrehmoment einstellt, auf die Zieldrehzahl zu regeln.

Die erfindungsgemäße Regelungsanordnung dient insbesondere zum Durchführen des Verfahrens und umfasst eine Fluidenergiemaschine zum Umwandeln von Energie in mechanische Arbeit, die eine Drehbewegung mit einem ersten Drehmoment erzeugt und die mit einer Ausgangswelle, an der ein zweites Drehmoment bei einer Drehzahl anliegt, verbunden ist. Die Regelungsanordnung umfasst ferner eine Regelungsvorrichtung zum Regeln des ersten Drehmoments derart, dass das zweite Drehmoment auf ein vorbestimmtes Zwischendrehmoment bei einer Zwischendrehzahl eingestellt wird. Die Fluidenergiemaschine und die Regelungsvorrichtung bilden einen ersten Regelkreis mit einer ersten Zeitkonstante. Die Regelungsanordnung umfasst zudem ein Hilfsaggregat zum Regeln der Drehzahl der Ausgangswelle derart, dass die Drehzahl von der Zwischendrehzahl auf eine vorbestimmte Zieldrehzahl eingestellt wird. Ein sich an der Ausgangswelle ergebenes Massenträgheitsmoment und das Hilfsaggregat bilden einen zweiten Regelkreis mit einer zweiten Zeitkonstante.

Der zweite Regelkreis wirkt direkt auf die Rotationsbewegung der Ausgangswelle, ohne auf die Fluidenergiemaschine unmittelbar Einfluss zu nehmen. Es muss als Zeitkonstante nicht mehr die Regelungszeitkonstante der Fluidenergiemaschine, sondern lediglich das Massenträgheitsmoment, das sich insbesondere durch die Fluidenergiemaschine und die angeschlossene Last, etwa ein Generator, an der Ausgangswelle ergibt, als Zeitkonstante berücksichtigt werden. Faktoren für die Regelungszeitkonstante der Fluidenergiemaschine sind beispielsweise Drücke, Volumenströme, sonstige Regler der Fluidenergiemaschine oder die Regelung beeinflussende Dimensionen von Teilen der Fluidenergiemaschine. Diese zweite Zeitkonstante ist wesentlich geringer als die erste Zeitkonstante.

Vorteilhaft ist die Fluidenergiemaschine als eine Wärmekraftmaschine, insbesondere Verbrennungskraftmaschine, Dampfmaschine, Dampfturbine oder Gasturbine, oder als ein Hydraulikmotor ausgebildet.

Vorteilhaft ist das Hilfsaggregat als Elektromotor, insbesondere als Gleichstrommotor oder als Asynchronmotor oder als Synchron-Reluktanzmotor, ausgebildet.

Als vorteilhaft hat es sich zudem erwiesen, wenn das Hilfsaggregat als mechanische Bremsvorrichtung ausgebildet ist, die vorzugsweise auf der Ausgangswelle angeordnet ist, um insbesondere durch Umwandlung von Rotationsenergie in Wärme die Drehzahl der Ausgangswelle zu reduzieren.

Die Regelungsvorrichtung fungiert als Stellglied für den ersten Regelkreis, wobei vorzugsweise die Regelungsvorrichtung eine Drossel als Stellglied aufweist. Vorteilhaft fungiert das Hilfsaggregat als Stellglied für den zweiten Regelkreis.

Vorteilhaft umfasst die Regelungsanordnung einen Generator, insbesondere Synchrongenerator, wobei bevorzugt die Fluidenergiemaschine den Generator antreibt. Hierdurch wird die chemische Energie der Fluidenergiemaschine in kinetische Energie umgewandelt, welche den Generator antreibt. Der Generator kann mit einem elektrischen Energieversorgungsnetz verbunden sein, um die von dem Generator erzeugte Energie in das elektrische Energieversorgungsnetz einzuspeisen.

Vorteilhaft wird die Drehzahl der Ausgangswelle derart geregelt, dass bei der Zieldrehzahl der Generator mit dem elektrischen Energieversorgungsnetz synchronisiert ist. Synchronisierung bedeutet, dass das Drehfeld des Generators und das Drehfeld des elektrischen Energieversorgungsnetzes vor der Zuschaltung des Generators an das elektrische Energieversorgungsnetz synchron verlaufend gemacht werden, das heißt, dass insbesondere Spannung, Phasenlage, Phasenfolge und Frequenz des Generators und des elektrischen Energieversorgungsnetzes identisch sind. Die Frequenz des Generators wird durch dessen Drehzahl abgebildet.

Der Generator, insbesondere in der Ausgestaltung als Synchrongenerator, verfügt bereits vor dem sogenannten Netzparallelbetrieb, bei dem der Generator mit dem elektrischen Netz synchronisiert ist, über ein elektrisches Inselnetz, das an Klemmen des Generators anliegt. Dieses Inselnetz hat eine eigene Frequenz, die sich durch die Drehzahl der Fluidenergiemaschine ergibt. Andererseits wird die Frequenz des Inselnetzes über die angeschlossenen Lasten definiert. Werden also bei gleicher Leistung der Fluidenergiemaschine elektrische Lasten zugeschaltet, verringert sich die Drehzahl. Daher hat es sich als vorteilhaft erwiesen, wenn das Hilfsaggregat als elektrische Last auf dem zu synchronisierenden Inselnetz der Fluidenergiemaschine ausgebildet ist, die insbesondere regelbar oder stufenweise zu- und abschaltbar ist.

Vorteilhafterweise findet die Fluidenergiemaschine für ein Stromaggregat zur Einspeisung von insbesondere aus gasförmigen Brennstoffen wie Biogas gewonnener Energie in ein elektrisches Energieversorgungsnetz Anwendung. Zu diesem Zweck kann die zweckmäßigerweise als Verbrennungskraftmaschine ausgestaltete Fluidenergiemaschine in einem anfänglichen Zeitabschnitt der Einschaltzeit den Generator auf eine Drehzahl in einem vorgegebenen Toleranzband um die Synchrondrehzahl beschleunigen. Ein Hilfsmotor regelt während einem abschließenden Zeitabschnitt der Einschaltzeit, der sogenannten Synchronisierungszeit, die Drehzahl der Verbrennungskraftmaschine in dem Toleranzband um die Synchrondrehzahl derart, dass am Ende der Synchronisierungszeit die Drehzahl des Generators der Synchrondrehzahl entspricht und zumindest auch die Phasenlage des Generators identisch mit der Phasenlage des elektrischen Energieversorgungsnetzes ist.

Ein Ausführungsbeispiel der Erfindung wird im Folgenden anhand der beigefügten Zeichnungen näher erläutert. Darin zeigen:
- Fig. 1a: ein schematisches Schaltbild des ersten Regelkreises und des zweiten Regelkreises im ersten Verfahrensschritt;
- Fig. 1b: ein schematisches Schaltbild des ersten Regelkreises und des zweiten Regelkreises im zweiten Verfahrensschritt;
- Fig. 2: ein schematisches Schaltbild der Fluidenergiemaschine und eines elektrischen Energieversorgungsnetzes; und
- Fig. 3: ein Diagramm der Drehzahl der Fluidenergiemaschine über die Zeit während des Synchronisierungsvorgangs mit dem elektrischen Energieversorgungsnetz.

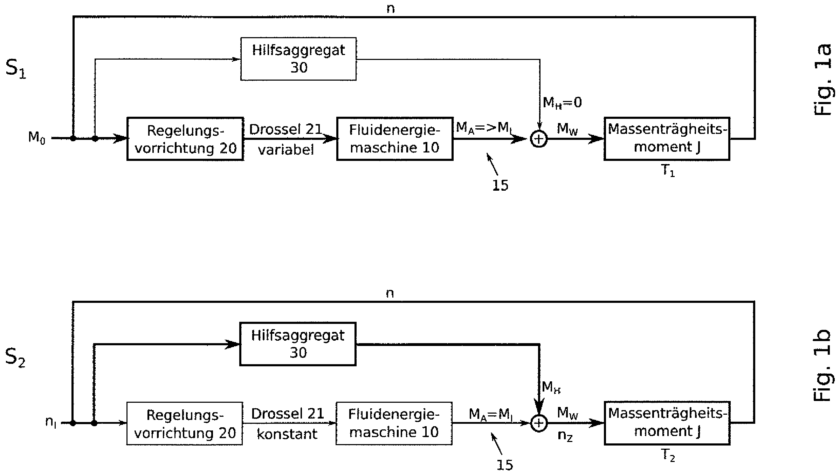

Fig. 1a und 1b zeigen den ersten und den zweiten Regelkreis zu verschiedenen Verfahrensschritten. Die dargestellte Regelungsanordnung umfasst eine Regelvorrichtung 20, die über eine Drossel 21 mit einer Fluidenergiemaschine 10 verbunden ist. Die Fluidenergiemaschine 10 erzeugt ein erstes Drehmoment M_{A}. Parallel dazu ist ein Hilfsaggregat 30 vorgesehen, das ein drittes Drehmoment M_{H} erzeugt. Zusammen ergeben das erste Drehmoment M_{A} und das dritte Drehmoment M_{H} ein zweites Drehmoment Mw, das an einer Ausgangswelle 15, die mit der Fluidenergiemaschine 10 verbunden ist, anliegt. Durch das Gewicht der Fluidenergiemaschine 10, der Regelungszeitkonstanten und etwaigen weiteren Lasten stellt sich auf der Ausgangswelle 15 ein Massenträgheitsmoment J ein. Die Drehzahl n der Ausgangswelle 15 wird über eine Rückführung zurück an die Regelungsvorrichtung 20 und das Hilfsaggregat 30 geleitet, wodurch sich die Regelkreise schließen.

Fig. 1a zeigt den ersten und den zweiten Regelkreis im ersten Verfahrensschritt S₁. Die dick markierten Linien und Objekte bilden den ersten Regelkreis, der in Verfahrensschritt S₁ aktiv ist. Der zweite Regelkreis ist in Verfahrensschritt S₂ inaktiv.

Der erste Regelkreis benutzt als Regelgröße das erste Drehmoment M_{A}, welches durch die Stellung der Drossel 21 beeinflusst wird. Das erste Drehmoment M_{A} der Fluidenergiemaschine 10 wird von einem Anfangsdrehmoment M₀ auf ein Zwischendrehmoment Mz geregelt. Da der zweite Regelkreis nicht aktiv ist, trägt das Hilfsaggregat 30 nichts zur Regelung bei und das dritte Drehmoment M_{H} ist null. Somit entspricht das auf die Ausgangswelle 15 wirkende zweite Drehmoment Mw im ersten Verfahrensschritt S₁ dem ersten Drehmoment M_{A}. Aufgrund der Regelung über die Drossel 21 weist der erste Regelkreis eine erste Zeitkonstante T₁ auf.

Fig. 1b zeigt den ersten und den zweiten Regelkreis im zweiten Verfahrensschritt S₂. Die dick markierten Linien und Objekte bilden den zweiten Regelkreis, der in Verfahrensschritt S₂ aktiv ist. Der erste Regelkreis ist in Verfahrensschritt S₂ nicht mehr aktiv, jedoch wird die Stellung der Drossel 21 weitgehend konstant gehalten. Das erste Drehmoment M_{A}, welches durch die Fluidenergiemaschine 10 erzeugt wird, entspricht weiterhin dem Zwischendrehmoment M_{I}.

Der zweite Regelkreis benutzt als Regelgröße die Drehzahl n der Ausgangswelle 15, welche über das Hilfsaggregat 30 beeinflusst wird. Nach Abschluss des ersten Verfahrensschritts S₁ entspricht das zweite Drehmoment Mw dem Zwischendrehmoment Mi und die Drehzahl n der Ausgangswelle entspricht der Zwischendrehzahl n_{I}.

Die Drehzahl n der Ausgangswelle 15 wird nun von der Zwischendrehzahl ni auf die Zieldrehzahl nz geregelt. Hierzu bringt das Hilfsaggregat 30 das dritte Drehmoment M_{H} auf, welches zusammen mit dem ersten Drehmoment M_{A} das zweite Drehmoment Mw an der Ausgangswelle 15 darstellt. Das Hilfsaggregat 30 regelt die Drehzahl n solange, bis sie der Zieldrehzahl nz entspricht und vom zweiten Regelkreis stabil gehalten werden kann.

Der zweite Regelkreis regelt direkt die Rotationsbewegung der Ausgangswelle 15, ohne auf die Fluidenergiemaschine 10 unmittelbar Einfluss zu nehmen. Es muss also lediglich das Massenträgheitsmoment J der Fluidenergiemaschine 10 und daran angeschlossene Lasten, also etwa ein Generator 60, berücksichtigt werden. Die zweite Zeitkonstante T₂ des zweiten Regelkreises ist somit wesentlich geringer als die erste Zeitkonstante T₁ des ersten Regelkreises.

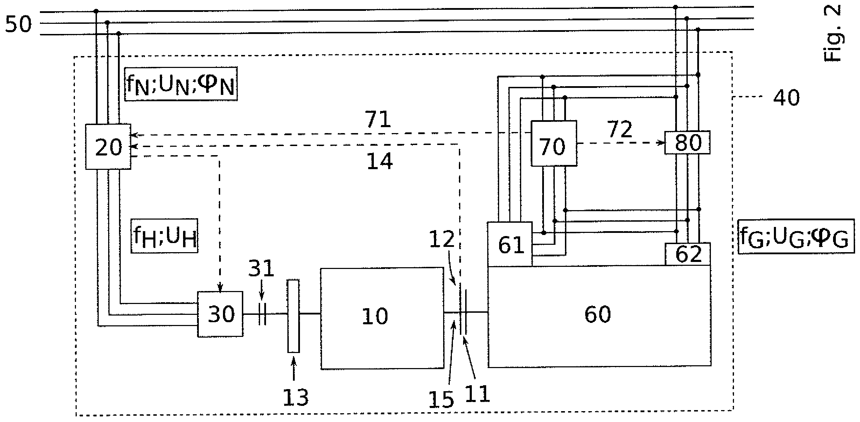

Fig. 2 zeigt ein detailliertes Ausführungsbeispiel der Regelungsanordnung, die für ein Stromaggregat 40 Anwendung findet. Die Fluidenergiemaschine ist als Verbrennungskraftmaschine 10 ausgebildet. Das in Fig. 2 gezeigte Stromaggregat 40 dient zur Einspeisung von Energie in ein elektrisches Energieversorgungsnetz 50. Das Stromaggregat 40 umfasst neben der Verbrennungskraftmaschine 10 einen Generator 60, der als Synchrongenerator ausgebildet ist. Die Verbrennungskraftmaschine 10 lässt sich insbesondere mit einem gasförmigen Brennstoff, wie zum Beispiel Biogas, betreiben. Die Verbrennungskraftmaschine 10 wird über die Stellung seiner Drossel 21 geregelt.

Die Verbrennungskraftmaschine 10 weist eine Generatorkupplung 11 auf, über welche die Verbrennungskraftmaschine 10 mit dem Generator 60 verbunden ist. Am Ausgang der Verbrennungskraftmaschine 10, beispielsweise auf dem Zahnkranz der Schwungmasse, ist ein Drehzahlsensor 12 angeordnet, der die Drehzahl n der mit der Verbrennungskraftmaschine 10 verbundenen Ausgangswelle 15 misst.

Zusätzlich umfasst das Stromaggregat 40 das als elektrischer Hilfsmotor ausgestaltete Hilfsaggregat 30, das über eine Elektrokupplung 31 mit einer Schwungscheibe 13 der Verbrennungskraftmaschine 10 verbunden ist und die Verbrennungskraftmaschine 10 in einem bestimmten Drehzahlbereich zur Synchronisierung des Generators 60 mit dem elektrischen Energieversorgungsnetz 50 regelt.

Das Stromaggregat 40 umfasst zudem die Regelvorrichtung 20, die als Frequenzumrichter ausgebildet ist, und mit dem elektrischen Hilfsmotor 30 und dem elektrischen Energieversorgungsnetz 50 oder einer anderen Energiequelle verbunden ist. Weiter umfasst das Stromaggregat 40 eine Synchronisierungsvorrichtung 70, die mit dem elektrischen Energieversorgungsnetz 50, der Regelvorrichtung 20 und dem Generator 60 verbunden ist.

Außerdem weist das Stromaggregat 40 einen Leistungsschalter 80 auf, der den Generator 60 und das elektrische Energieversorgungsnetz 50 miteinander verbindet. Solange das Stromaggregat 40 nicht mit dem elektrischen Energieversorgungsnetz 50 synchronisiert ist, darf der Generator 60 nicht mit dem elektrischen Energieversorgungsnetz 50 verbunden sein. Der Leistungsschalter 80 muss demnach ausgeschaltet sein, um die Verbindung zwischen dem Generator 60 und dem elektrischen Energieversorgungsnetz 50 zu unterbrechen. Die Synchronisierungsvorrichtung 70 überwacht den Synchronisierungsstatus und steuert die Freigabe der Verbindung zwischen Generator 60 und dem elektrischen Energieversorgungsnetz 50 über den Leistungsschalter 80. Hierzu versorgt die Synchronisierungsvorrichtung 70 den Leistungsschalter 80 mit einem Zuschaltungsfreigabesignal 72. Sobald die Synchronisierung zwischen dem Generator 60 und dem elektrischen Energieversorgungsnetz 50 abgeschlossen ist, sendet die Synchronisierungsvorrichtung 70 dem Leistungsschalter 80 ein Zuschaltungsfreigabesignal 72, sodass der Leistungsschalter 80 die Verbindung zwischen dem Generator 60 und dem elektrischen Energieversorgungsnetz 50 schließt. Der Generator 60 speist dann seine Energie in das elektrische Energieversorgungsnetz 50.

Zum Synchronisieren des Stromaggregats 40 mit dem elektrischen Energieversorgungsnetz 50 wird die Verbrennungskraftmaschine 10 über die Drossel 21 in ein vorgegebenes, um die Zieldrehzahl nz des Generators 60 definiertes Toleranzband hochgefahren. Die Zieldrehzahl nz entspricht beispielsweise 1300 Umdrehungen pro Minute.

Für die exakte Regelung der Frequenz f_{G} und der Phasenlage ϕ_{G} des Generators 60 regelt der elektrische Hilfsmotor 30 die Drehzahl n der Verbrennungskraftmaschine 10, welche den Generator 60 antreibt. Der elektrische Hilfsmotor 30 selbst wird durch die Regelvorrichtung 20 geregelt. Die Regelvorrichtung 20 gibt dem Hilfsmotor 30 eine geeignete Versorgungsspannung UH mit einer Frequenz f_{H} vor.

Die Regelung der Regelvorrichtung 20 basiert auf Daten des Energieversorgungsnetzes 50 und bis zu zwei Signalen, optional dem Drehzahlsignal 14 des Drehzahlsensors 12 sowie unbedingt dem Drehzahl-Steuersignal 71 der Synchronisierungsvorrichtung 70. Das Drehzahlsignal 14 bildet die aktuelle Drehzahl n, also Frequenz, der Verbrennungskraftmaschine 10, also auch des Generators 60, ab. Das Drehzahl-Steuersignal 71 wird von der Synchronisierungsvorrichtung 70 basierend auf dem Ausgang 62 des Generators 60 und den Daten des elektrischen Energieversorgungsnetzes 50 als relative oder absolute Drehzahlsollwertvorgabe generiert.

Die Daten des elektrischen Energieversorgungsnetzes 50 umfassen die Spannung U_{N}, die Phasenlage ϕ_{N}, die Phasenfolge und die Frequenz f_{N} des elektrischen Energieversorgungsnetzes 50.

Der Generator 60 gilt als mit dem elektrischen Energieversorgungsnetz 50 synchronisiert, wenn die Spannung U_{G}, die Phasenlage ϕ_{G}, die Phasenfolge und die Frequenz f_{G} des Generators 60 identisch mit der Spannung U_{N}, der Phasenlage ϕ_{N}, der Phasenfolge und der Frequenz f_{N} des elektrischen Energieversorgungsnetzes 50 sind.

Die Spannung und Phasenfolge sind zu vernachlässigen. Die Spannung U_{G} des Generators 60 wird durch einen automatischen Spannungsregler 61 des Generators 60 geregelt, welcher als Eingang die Spannung U_{N} des elektrischen Energieversorgungsnetzes 50 und die Ausgangsspannung U_{G} des Generators 60 erhält. Die Phasenfolge ist über die Drehrichtung des Generators definiert. Somit regelt der elektrische Hilfsmotor 30 die Frequenz f_{G}, Drehzahl n des Generators 60, und die Phasenlage ϕ_{G}.

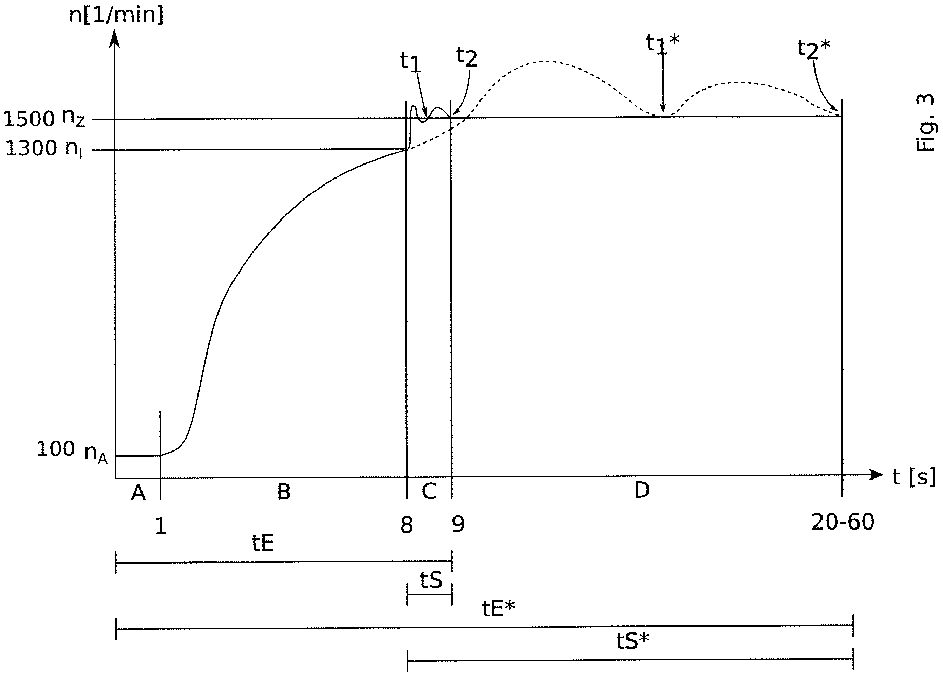

Wie in Fig. 3 gezeigt ist, kann die Synchronisierung in mehrere Zeitabschnitte A bis D aufgeteilt werden. Das Diagramm gemäß Fig. 3 zeigt zum einen die Synchronisierung mit Regelung durch den elektrischen Hilfsmotor 30 anhand der durchgezogenen Linie und zum anderen die Synchronisierung aus dem Stand der Technik mit Regelung rein durch die Drossel 21 anhand der gestrichelten Linie.

In den Zeitabschnitten A und B sind beide Synchronisierungsverfahren identisch. In Zeitabschnitt A befindet sich die Verbrennungskraftmaschine 10 im Anlasserbetrieb. Die Drehzahl n der Verbrennungskraftmaschine entspricht der Anfangsdrehzahl n_{A} von etwa 100 Umdrehungen pro Minute. Nach etwa einer Sekunde des Anlassens wird die Verbrennungskraftmaschine 10 in Zeitabschnitt B durch die Regelung der Drossel 21 auf die Zwischendrehzahl ni von etwa 1300 Umdrehungen pro Minute in die Nähe der Zieldrehzahl nz von 1500 Umdrehung pro Minute beschleunigt. Dieser Vorgang dauert etwa 4 Sekunden.

In Zeitabschnitt C setzt die Regelung durch den elektrischen Hilfsmotor 30 ein. Dies wird als sogenannte Synchronisierungszeit ts bezeichnet. Die Drehzahl n der Verbrennungskraftmaschine 10 wird derart geregelt, dass die Drehzahl n und somit die Frequenz des Generators 60 der Zieldrehzahl nz entspricht. Dies ist in Fig. 3 im Zeitpunkt t₁ der Fall. Danach wird mit kleinen Steuerimpulsen die Drehzahl n derart geregelt, dass die Phasenlage ϕ_{G}, des Generators 60 identisch mit der Phasenlage ϕ_{N} des elektrischen Energieversorgungsnetzes 50 ist. Aufgrund der kleinen Regelzeitkonstanten von einigen hundert Mikrosekunden des elektrischen Frequenzumrichters ist die Synchronisierungszeit ts lediglich durch das Massenträgheitsmoment J der Verbrennungskraftmaschine 10 limitiert. Die Synchronisierungszeit ts beträgt etwa eine Sekunde, kann aber auch deutlich niedriger, etwa im Bereich von 400 Millisekunden, ausfallen.

Zu dem Zeitpunkt t₂ entspricht die Spannung U_{G}, die Phasenlage ϕ_{G}, die Phasenfolge und die Frequenz fc des Generators 60 der Spannung U_{N}, der Phasenlage ϕ_{N}, der Phasenfolge und der Frequenz f_{N} des elektrischen Energieversorgungsnetzes 50. Der Generator 60 ist somit mit dem elektrischen Energieversorgungsnetz 50 innerhalb von einer Einschaltzeit t_{A} von 8 Sekunden gestartet und synchronisiert worden.

Die Synchronisierungsvorrichtung 70 sendet nun das Zuschaltfreigabesignal 72 an den Leistungsschalter 80. Der Leistungsschalter 80 schließt die Verbindung zwischen Generator 60 und dem elektrischen Energieversorgungsnetz 50 und das Stromaggregat 40 speist Energie in das Energieversorgungsnetz 50.

Zum Vergleich zeigt die gestrichelte Linie in den Zeitabschnitten C und D, dass die vergleichsweise deutlich trägere Regelung mit der Drossel 21 der Verbrennungskraftmaschine 10 sich nur vergleichsweise langsam an die Zieldrehzahl nz annähert. Erst deutlich später, zum Zeitpunkt t₁* in Zeitabschnitt D, wird überhaupt die Zieldrehzahl nz erreicht. Die Regelung der Phasenlage ist dann zum Zeitpunkt t₂* abgeschlossen. Die Synchronisierungszeit t_{S}* liegt zeitlich im Bereich von 10 bis 50 Sekunden, was zu einer deutlich längeren Einschaltzeit t_{E}* von 20 bis 60 Sekunden führt.

In den Zeitabschnitten A und B wird die Verbrennungskraftmaschine 10 ausschließlich durch den ersten Regelkreis geregelt. In den Zeitabschnitten C und D wird die Verbrennungskraftmaschine 10 ausschließlich durch den zweiten Regelkreis geregelt. Es ist allerdings auch denkbar, dass zu jedem der Zeitabschnitte A bis D sowohl der erste Regelkreis als auch der zweite Regelkreis an der Regelung der Verbrennungskraftmaschine 10 teilhaben.

### Bezugszeichenliste

- 10: Fluidenergiemaschine / Verbrennungskraftmaschine
- 11: Generatorkupplung
- 12: Drehzahlsensor
- 13: Schwungscheibe
- 14: Drehzahlsignal
- 15: Ausgangswelle

- 20: Regelvorrichtung
- 21: Drossel

- 30: elektrischer Hilfsmotor
- 31: Elektrokupplung

- 40: Stromaggregat

- 50: Elektrisches Energieversorgungsnetz

- 60: Generator
- 61: Automatischer Spannungsregler
- 62: Ausgang

- 70: Synchronisierungsvorrichtung
- 71: Drehzahl-Steuersignal
- 72: Zuschaltfreigabesignal

- 80: Leistungsschalter

- t1: Zeitpunkt an dem die Drehzahlregelung abgeschlossen ist (Hilfsmotorregelung)
- t2: Zeitpunkt an dem die Phasenlagenregelung abgeschlossen ist (Hilfsmotorregelung)
- t1*: Zeitpunkt an dem die Drehzahlregelung abgeschlossen ist (Drosselregelung)
- t2*: Zeitpunkt an dem die Phasenregelung abgeschlossen ist (Drosselregelung)

- A,B,C,D: Zeitabschnitte

- t_{S}: Synchronisierungszeit (Hilfsmotorregelung)
- t_{E}: Einschaltzeit (Hilfsmotorregelung)

- t_{S}*: Synchronisierungszeit (Drosselregelung)
- t_{E}*: Einschaltzeit (Drosselregelung)

- ϕ_{N}: Phasenlage elektrischen Energieversorgungsnetz
- U_{N}: Spannung elektrisches Energieversorgungsnetz
- f_{N}: Frequenz Energieversorgungsnetz

- U_{H}: Spannung Hilfsmotor
- f_{H}: Frequenz Hilfsmotor

- ϕ_{G}: Phasenlage Generator
- U_{G}: Spannung Generator
- f_{G}: Frequenz Generator

- n_{Z}: Zieldrehzahl
- n_{I}: Zwischendrehzahl
- n_{A}: Anfangsdrehzahl
- n: Drehzahl

- M_{A}: erstes Drehmoment
- M_{W}: zweites Drehmoment
- M_{H}: drittes Drehmoment
- M₀: Anfangsdrehmoment
- M_{I}: Zwischendrehmoment

## Patentansprüche

1. Verfahren zum Regeln einer Fluidenergiemaschine (10), die für ein Stromaggregat (40) zur Einspeisung von insbesondere aus gasförmigen Brennstoffen wie Biogas gewonnener Energie in ein elektrisches Energieversorgungsnetz (50), das eine vorgegebene Phasenlage (ϕN) hat, Anwendung findet;
wobei mittels der Fluidenergiemaschine (10) Energie in mechanische Arbeit umgewandelt wird;
wobei die eine Drehbewegung mit einem ersten Drehmoment (M_{A}) erzeugende Fluidenergiemaschine (10) mit einer Ausgangswelle (15), an der ein zweites Drehmoment (M_{W}) bei einer vorbestimmten Drehzahl (n) anliegt, verbunden ist;
wobei ein durch die Fluidenergiemaschine (10) angetriebener Generator (60) mit dem elektrischen Energieversorgungsnetz (50) verbunden ist, um die von dem Generator (60) erzeugte Energie, die eine Phasenlage (ϕG) hat, in das elektrische Energieversorgungsnetz (50) einzuspeisen;
wobei das Stromaggregat (40) eine Regelungsvorrichtung (20) und ein Hilfsaggregat (30) umfasst;
wobei die Fluidenergiemaschine (10) und die Regelungsvorrichtung (20) einen ersten Regelkreis mit einer ersten Zeitkonstante (T₁) bilden, für den die Regelungsvorrichtung (20) als Stellglied fungiert;
wobei ein sich an der Ausgangswelle (15) ergebendes Massenträgheitsmoment (J) und das Hilfsaggregat (30) einen zweiten Regelkreis mit einer zweiten Zeitkonstante (T₂), die geringer ist als die erste Zeitkonstante (T₁), bilden, für den das Hilfsaggregat (30) als Stellglied fungiert, und
wobei das Verfahren die folgenden Verfahrensschritte aufweist:
Regeln des ersten Drehmoments (M_{A}) in einem ersten Verfahrensschritt (S₁) mittels der Regelungsvorrichtung (20) derart, dass das zweite Drehmoment (M_{W}) auf ein vorbestimmtes Zwischendrehmoment (M_{I}) bei einer Zwischendrehzahl (n_{I}), die in einem Toleranzband um eine vorbestimmte Zieldrehzahl (n_{Z}) liegt, eingestellt wird;
Regeln der Drehzahl (n) der Ausgangswelle (15) in einem zweiten Verfahrensschritt (S₂) mittels des Hilfsaggregats (30) derart, dass die Drehzahl (n) von der Zwischendrehzahl (n_{I}) auf die Zieldrehzahl (n_{Z}) eingestellt wird, um die Phasenlage (ϕG) des Generators (60) mit der Phasenlage (ϕN) des elektrischen Energieversorgungsnetzes (50) in Einklang zu bringen;
wobei in dem ersten Verfahrensschritt (S₁) das erste Drehmoment (M_{A}) ausschließlich mittels der Regelungsvorrichtung (20) geregelt wird und in dem zweiten Verfahrensschritt (S₂) die Drehzahl (n) ausschließlich mittels des Hilfsaggregats (30) geregelt wird, um die Fluidenergiemaschine (10) auszuregeln bis die Fluidenergiemaschine (10) die Zieldrehzahl (n_{z}) stabil hält.

2. Verfahren nach Anspruch 1, **dadurch gekennzeichnet, dass** die Regelungsvorrichtung (20) eine Drossel (21) als Stellglied umfasst.

3. Verfahren Anspruch 1 oder 2, **dadurch gekennzeichnet, dass** die Drehzahl (n) der Ausgangswelle (15) derart geregelt wird, dass bei der Zieldrehzahl (n_{z}) der Generator (60) mit dem elektrischen Energieversorgungsnetz (50) synchronisiert ist.

4. Verfahren nach einem der Ansprüche 1 bis 3, **dadurch gekennzeichnet, dass** das Toleranzband um die Zieldrehzahl (n_{z}) ein Bereich zwischen 60% und 140% der Zieldrehzahl (nz), insbesondere ein Bereich zwischen 80% und 120% der Zieldrehzahl (n_{z}) ist.

5. Regelungsanordnung zum Durchführen des Verfahrens nach einem der Ansprüche 1 bis 4, umfassend:
eine Fluidenergiemaschine (10) zum Umwandeln von Energie in mechanische Arbeit, die eine Drehbewegung mit einem ersten Drehmoment (M_{A}) erzeugt und die mit einer Ausgangswelle (15), an der ein zweites Drehmoment (Mw) bei einer Drehzahl (n) anliegt, verbunden ist;
einen durch die Fluidenergiemaschine (10) angetriebenen Generator (60), der mit dem elektrischen Energieversorgungsnetz (50), das eine vorgegebene Phasenlage (ϕN) hat, verbindbar ist, um die von dem Generator (60) erzeugte Energie, die eine Phasenlage (ϕG) hat, in das elektrische Energieversorgungsnetz (50) einzuspeisen;
eine Regelungsvorrichtung (20) zum Regeln des ersten Drehmoments (M_{A}), die derart ausgestaltet ist, dass das zweite Drehmoment (M_{W}) auf ein vorbestimmtes Zwischendrehmoment (M_{I}) bei einer Zwischendrehzahl (n_{I}) eingestellt wird;
wobei die Fluidenergiemaschine (10) und die Regelungsvorrichtung (20) einen ersten Regelkreis mit einer ersten Zeitkonstante (T₁) bilden, für den die Regelungsvorrichtung (20) als Stellglied fungiert;
ein Hilfsaggregat (30), das als Stellglied für den zweiten Regelkreis fungiert, zum Regeln der Drehzahl (n) der Ausgangswelle (15), das derart ausgestaltet ist, dass die Drehzahl (n) von der Zwischendrehzahl (ni), die in einem Toleranzband um eine vorbestimmte Zieldrehzahl (n_{z}) liegt, auf eine vorbestimmte Zieldrehzahl (n_{z}) eingestellt wird, bei welcher der Generator (60) mit dem elektrischen Energieversorgungsnetz (50) synchronisierbar ist, um die Phasenlage (ϕG) des Generators (60) mit der Phasenlage (ϕN) des elektrischen Energieversorgungsnetzes (50) in Einklang zu bringen;
wobei ein sich an der Ausgangswelle (15) ergebendes Massenträgheitsmoment (J) und das Hilfsaggregat (30) einen zweiten Regelkreis mit einer zweiten Zeitkonstante (T₂), die geringer als die erste Zeitkonstante ist, bilden, um die Fluidenergiemaschine (10) auszuregeln bis die Fluidenergiemaschine (10) die Zieldrehzahl (nz) stabil hält.

6. Regelungsanordnung nach Anspruch 5, **dadurch gekennzeichnet, dass** die Fluidenergiemaschine (10) als eine Wärmekraftmaschine, insbesondere Verbrennungskraftmaschine, Dampfmaschine, Dampfturbine oder Gasturbine, oder als ein Hydraulikmotor ausgebildet ist.

7. Regelungsanordnung nach Anspruch 5 oder 6, **dadurch gekennzeichnet, dass** das Hilfsaggregat (30) als Elektromotor, insbesondere als Gleichstrommotor oder als Asynchronmotor oder als Synchron-Reluktanzmotor, ausgebildet ist.

8. Regelungsanordnung nach Anspruch 5 oder 6, **dadurch gekennzeichnet, dass** das Hilfsaggregat (30) als eine mechanische Bremsvorrichtung ausgebildet ist, die vorzugsweise auf der Ausgangswelle (15) angeordnet ist, um insbesondere durch Umwandlung von Rotationsenergie in Wärme die Drehzahl (n) der Ausgangswelle (15) zu reduzieren.

9. Regelungsanordnung nach einem der Ansprüche 5 bis 8, **dadurch gekennzeichnet, dass** die Regelungsvorrichtung (20) eine Drossel (21) als Stellglied umfasst.

10. Regelungsanordnung nach einem der Ansprüche 5 bis 9, **dadurch gekennzeichnet, dass** der Generator (60) als Synchrongenerator ausgestaltet ist.

11. Regelungsanordnung nach Anspruch 10, **dadurch gekennzeichnet, dass** die Drehzahl (n) der Ausgangswelle (15) derart geregelt wird, dass bei der Zieldrehzahl (nz) der Generator (60) mit dem elektrischen Energieversorgungsnetz (50) synchronisiert ist.

12. Regelungsanordnung nach Anspruch 10 oder 11, **dadurch gekennzeichnet, dass** das Hilfsaggregat (30) als elektrische Last ausgebildet ist, die insbesondere regelbar oder stufenweise zu- und abschaltbar ist.

## Claims

1. A method of controlling a fluid energy machine (10) applicable to a power generator (40) for feeding energy extracted in particular from gaseous fuels such as biogas into an electrical power supply network (50) having a predetermined phase (ϕN);
whereby energy is converted into mechanical work by means of the fluid energy machine (10);
wherein the fluid energy machine (10) generating a rotary motion with a first torque (_{MA)} is connected to an output shaft (15) to which a second torque (_{MW}) is applied at a predetermined speed (n);
wherein a generator (60) driven by the fluid energy machine (10) is connected to the electrical power supply network (50) to feed the energy generated by the generator (60) having a phase (ϕG) into the electrical power supply network (50);
wherein the power unit (40) comprises a control device (20) and an auxiliary power unit (30);
wherein the fluid energy machine (10) and the control device (20) form a first control loop with a first time constant (T1) for which the control device (20) acts as an actuator;
wherein a mass moment of inertia (J) resulting at the output shaft (15) and the auxiliary unit (30) form a second control loop with a second time constant (T2), which is lower than the first time constant (T1), for which the auxiliary unit (30) functions as an actuator, and
wherein the method comprises the following process steps:
controlling the first torque (_{MA}) in a first process step (_{S1}) by means of the control device (20) in such a way that the second torque (_{MW}) is set to a predetermined intermediate torque (_{MI}) at an intermediate speed (nl) which lies in a tolerance band around a predetermined target speed (nZ);
controlling the speed (n) of the output shaft (15) in a second process step (_{S2}) by means of the auxiliary unit (30) in such a way that the speed (n) is adjusted from the intermediate speed (nI) to the target speed (nZ) in order to bring the phase position (ϕG) of the generator (60) into line with the phase position (ϕN) of the electrical power supply network (50);
wherein in the first process step (_{S1}) the first torque (_{MA}) is controlled exclusively by means of the control device (20) and in the second process step (_{S2)} the speed (n) is controlled exclusively by means of the auxiliary unit (30) in order to regulate the fluid energy machine (10) until the fluid energy machine (10) keeps the target speed (nZ) stable.

2. Method according to claim 1, **characterised in that** the control device (20) comprises a throttle (21) as an actuator.

3. Method Claim 1 or 2, **characterised in that** the speed (n) of the output shaft (15) is controlled in such a way that at the target speed (nZ) the generator (60) is synchronised with the electrical power supply network (50).

4. Method according to any one of claims 1 to 3, **characterised in that** the tolerance band around the target speed (nZ) is a range between 60% and 140% of the target speed (nZ), in particular a range between 80% and 120% of the target speed (nZ).

5. A control arrangement for carrying out the method of any one of claims 1 to 4, comprising:
a fluid energy machine (10) for converting energy into mechanical work, which produces a rotary motion with a first torque (_{MA}) and which is connected to an output shaft (15) to which a second torque (_{MW)} is applied at a rotational speed (n);
a generator (60) driven by the fluid energy machine (10) and connectable to the electrical power supply network (50) having a predetermined phase (ϕN) to feed the energy generated by the generator (60) having a phase (ϕG) to the electrical power supply network (50);
a control device (20) for controlling the first torque (_{MA}), which is designed in such a way that the second torque (_{MW}) is set to a predetermined intermediate torque (_{MI)} at an intermediate speed (nI);
wherein the fluid energy machine (10) and the control device (20) form a first control loop with a first time constant (T1) for which the control device (20) acts as an actuator;
an auxiliary unit (30), acting as an actuator for the second control loop, for controlling the rotational speed (n) of the output shaft (15), which is configured such that the rotational speed (n) is adjusted from the intermediate rotational speed (nl), which is within a tolerance band around a predetermined target rotational speed (nZ), to a predetermined target speed (nZ) at which the generator (60) is synchronisable with the electrical power supply network (50) to bring the phase position (ϕG) of the generator (60) into line with the phase position (ϕN) of the electrical power supply network (50);
wherein a mass moment of inertia (J) arising at the output shaft (15) and the auxiliary power unit (30) form a second control loop with a second time constant (T2), which is lower than the first time constant, to regulate the fluid energy machine (10) until the fluid energy machine (10) keeps the target speed (nZ) stable.

6. Control arrangement according to claim 5, **characterised in that** the fluid energy machine (10) is designed as a heat engine, in particular an internal combustion engine, steam engine, steam turbine or gas turbine, or as a hydraulic motor.

7. Control arrangement according to claim 5 or 6, **characterised in that** the auxiliary unit (30) is designed as an electric motor, in particular as a direct current motor or as an asynchronous motor or as a synchronous reluctance motor.

8. Control arrangement according to claim 5 or 6, **characterised in that** the auxiliary unit (30) is designed as a mechanical braking device which is preferably arranged on the output shaft (15) in order to reduce the speed (n) of the output shaft (15), in particular by converting rotational energy into heat.

9. A control arrangement according to any one of claims 5 to 8, **characterised in that** the control device (20) comprises a throttle (21) as an actuator.

10. Control arrangement according to one of claims 5 to 9, **characterised in that** the generator (60) is designed as a synchronous generator.

11. Control arrangement according to claim 10, **characterised in that** the speed (n) of the output shaft (15) is controlled in such a way that at the target speed (nZ) the generator (60) is synchronised with the electrical power supply network (50).

12. Control arrangement according to claim 10 or 11, **characterised in that** the auxiliary unit (30) is designed as an electrical load which can be switched on and off, in particular controllably or in steps.

## Revendications

1. Procédé de commande d'une machine à énergie fluide (10) applicable à un générateur de puissance (40) pour alimenter en énergie extraite notamment de combustibles gazeux tels que du biogaz un réseau d'alimentation électrique (50) ayant une phase prédéterminée (ϕN);
par laquelle l'énergie est convertie en travail mécanique au moyen de la machine à énergie fluide (10) ;
dans lequel la machine à énergie hydraulique (10) générant un mouvement rotatif avec un premier couple _{(MA)} est connectée à un arbre de sortie (15) auquel un second couple (_{MW}) est appliqué à une vitesse prédéterminée (n) ;
dans lequel un générateur (60) entraîné par la machine à énergie fluide (10) est connecté au réseau d'alimentation électrique (50) pour alimenter l'énergie générée par le générateur (60) ayant une phase (ϕG) dans le réseau d'alimentation électrique (50);
dans lequel l'unité de puissance (40) comprend un dispositif de commande (20) et une unité de puissance auxiliaire (30) ;
dans lequel la machine à énergie fluidique (10) et le dispositif de commande (20) forment une première boucle de commande avec une première constante de temps (T1) pour laquelle le dispositif de commande (20) agit comme un actionneur ;
dans lequel un moment d'inertie de masse (J) résultant au niveau de l'arbre de sortie (15) et l'unité auxiliaire (30) forment une seconde boucle de commande avec une seconde constante de temps (T2), qui est inférieure à la première constante de temps (T1), pour laquelle l'unité auxiliaire (30) fonctionne comme un actionneur, et
dans lequel le procédé comprend les étapes de traitement suivantes :
commander le premier couple (_{MA}) dans une première étape du processus (si) au moyen du dispositif de commande (20) de telle sorte que le deuxième couple (_{MW}) soit réglé sur un couple intermédiaire prédéterminé (_{MI}) à une vitesse intermédiaire (nI) qui se trouve dans une bande de tolérance autour d'une vitesse cible prédéterminée (nZ) ;
commander la vitesse (n) de l'arbre de sortie (15) dans une deuxième étape du processus (_{S2}) au moyen de l'unité auxiliaire (30) de telle sorte que la vitesse (n) soit ajustée de la vitesse intermédiaire (nI) à la vitesse cible (nZ) afin d'amener la position de phase (ϕG) du générateur (60) en conformité avec la position de phase (ϕN) du réseau d'alimentation électrique (50) ;
dans lequel, dans la première étape du processus (_{S1}) le premier couple (_{MA}) est commandé exclusivement au moyen du dispositif de commande (20) et, dans la deuxième étape du processus (_{S2)}, la vitesse (n) est commandée exclusivement au moyen de l'unité auxiliaire (30) afin de réguler la machine à énergie hydraulique (10) jusqu'à ce que la machine à énergie hydraulique (10) maintienne stable la vitesse cible (nZ).

2. Procédé selon la revendication 1, **caractérisé en ce que** le dispositif de commande (20) comprend un étrangleur (21) comme actionneur.

3. Procédé selon la revendication 1 ou 2, **caractérisé en ce que** la vitesse (n) de l'arbre de sortie (15) est commandée de telle manière qu'à la vitesse cible (nZ), le générateur (60) est synchronisé avec le réseau d'alimentation électrique (50).

4. Procédé selon l'une quelconque des revendications 1 à 3, **caractérisé en ce que** la bande de tolérance autour de la vitesse cible (nZ) est une plage comprise entre 60% et 140% de la vitesse cible (nZ), en particulier une plage comprise entre 80% et 120% de la vitesse cible (nZ).

5. Dispositif de commande pour mettre en œuvre le procédé de l'une quelconque des revendications 1 à 4, comprenant :
une machine à énergie fluidique (10) pour convertir de l'énergie en travail mécanique, qui produit un mouvement rotatif avec un premier couple (_{MA}) et qui est reliée à un arbre de sortie (15) auquel est appliqué un second couple (_{MW)} à une vitesse de rotation (n) ;
un générateur (60) entraîné par la machine à énergie fluide (10) et pouvant être connecté au réseau d'alimentation électrique (50) ayant une phase prédéterminée (ϕN) pour alimenter l'énergie générée par le générateur (60) ayant une phase (ϕG) au réseau d'alimentation électrique (50) ;
un dispositif de commande (20) pour commander le premier couple (_{MA}), qui est conçu de telle sorte que le deuxième couple (_{MW}) est réglé sur un couple intermédiaire prédéterminé (_{MI)} à une vitesse de rotation intermédiaire (nI) ;
dans lequel la machine à énergie fluidique (10) et le dispositif de commande (20) forment une première boucle de commande avec une première constante de temps (T1) pour laquelle le dispositif de commande (20) agit comme un actionneur;
une unité auxiliaire (30), agissant en tant qu'actionneur pour la deuxième boucle de régulation, pour commander la vitesse de rotation (n) de l'arbre de sortie (15), qui est configurée de telle sorte que la vitesse de rotation (n) est ajustée à partir de la vitesse de rotation intermédiaire (nI), qui est à l'intérieur d'une bande de tolérance autour d'une vitesse de rotation cible prédéterminée (nZ), à une vitesse cible prédéterminée (nZ) à laquelle le générateur (60) est synchronisable avec le réseau d'alimentation électrique (50) pour amener la position de phase (ϕG) du générateur (60) en ligne avec la position de phase (ϕN)du réseau d'alimentation électrique (50) ;
dans lequel un moment d'inertie de masse (J) survenant au niveau de l'arbre de sortie (15) et l'unité de puissance auxiliaire (30) forment une seconde boucle de commande avec une seconde constante de temps (T2), qui est inférieure à la première constante de temps, pour réguler la machine à énergie hydraulique (10) jusqu'à ce que la machine à énergie hydraulique (10) maintienne la vitesse cible (nZ) stable.

6. Dispositif de commande selon la revendication 5, **caractérisé en ce que** la machine à énergie fluidique (10) est conçue comme un moteur thermique, en particulier un moteur à combustion interne, un moteur à vapeur, une turbine à vapeur ou une turbine à gaz, ou comme un moteur hydraulique.

7. Dispositif de commande selon la revendication 5 ou 6, **caractérisé en ce que** l'unité auxiliaire (30) est conçue comme un moteur électrique, en particulier comme un moteur à courant continu ou comme un moteur asynchrone ou comme un moteur à réluctance synchrone.

8. Dispositif de commande selon la revendication 5 ou 6, **caractérisé en ce que** l'unité auxiliaire (30) est conçue comme un dispositif de freinage mécanique qui est de préférence disposé sur l'arbre de sortie (15) afin de réduire la vitesse (n) de l'arbre de sortie (15), en particulier en convertissant l'énergie de rotation en chaleur.

9. Dispositif de commande selon l'une quelconque des revendications 5 à 8, **caractérisé en ce que** le dispositif de commande (20) comprend un étrangleur (21) en tant qu'actionneur.

10. Dispositif de commande selon l'une des revendications 5 à 9, **caractérisé en ce que** le générateur (60) est conçu comme un générateur synchrone.

11. Dispositif de commande selon la revendication 10, **caractérisé en ce que** la vitesse (n) de l'arbre de sortie (15) est commandée de telle sorte qu'à la vitesse cible (nZ), le générateur (60) est synchronisé avec le réseau d'alimentation électrique (50).

12. Dispositif de commande selon la revendication 10 ou 11, **caractérisé en ce que** l'unité auxiliaire (30) est conçue comme une charge électrique qui peut être mise en marche et arrêtée, en particulier de manière contrôlée ou par étapes.
